# EUROPEAN PATENT SPECIFICATION

(11) **EP 1 592 727 B1**
(45) Date of publication and mention of the grant of the patent: **16.11.2011**
(21) Application number: 04709043.6
(22) Date of filing: 06.02.2004
(51) Int. Cl.: C08G 18/76, C08G 18/10, C08G 18/48

(54) **HYDROPHILIC POLYURETHANE POLYMERS DERIVED FROM A MDI-BASED ISOCYANATE-TERMINATED PREPOLYMER**
VON EINEM AUF MDI BASIERENDEN ISOCAYNATTERMINIERTEN PREPOLYMER ABGELEITETE HYDROPHILE POLYURETHANPOLYMERE
POLYMERES POLYURETHANES HYDROPHILES DERIVES D'UN PREPOLYMERE A BASE DE MDI ET A TERMINAISON ISOCYANATE

(30) Priority: 14.02.2003 US 447614 P
(43) Date of publication of application: 09.11.2005
(73) Proprietor: Dow Global Technologies LLC, Midland, MI 48674 (US)
(72) Inventor: THIEDE, Verena, 48151 Muenster (DE); LOPEZ, Netza, B., Canton, GA 30114 (US); PELLACANI, Luigi, f-67100 Strasbourg (FR); PARKS, Franklin, E., Freeport, TX 77541 (US)
(74) Representative: Raynor, John
(86) International application number: PCT/US2004/003458
(87) International publication number: WO 2004/074343

(56) References cited:
- WO-A-02/068492
- US-A- 6 034 149

## Description

Hydrophilic polyurethane foams can be prepared by a process in which a hydrophilic prepolymer having isocyanate end groups is mixed and reacted with water. U.S. Patents 3,861,993 and 3,889,417 disclose a hydrophilic polyurethane foam which is formed by mixing and reacting with water an isocyanate capped polyoxyethylene glycol prepolymer using a molar ratio of H₂O to NCO groups in the prepolymer of 6.5 to 390:1.

A particular family of polyurethane prepolymers, derived from methylene diphenylisocyanate (MDI) and the aqueous two-stage process foams produced therefrom, are disclosed in U.S. Patent 4,365,025. An isocyanate-containing prepolymer in which the isocyanate is a mixture of MDI and polymeric forms of MDI is foamed by mixing it with an approximately equal amount of water. The resultant flexible foams are characterized by greater hydrolytic stability than those foamed from toluene diisocyanate (TDI) prepolymers. Often other hydrophilic materials, such as fibers (See, for example, U.S. Patent 4,127,516) or superabsorbent polymers (See, for example, U.S. Patents 5,064,653 and Patent 6,034,149) or particles (See, for example, U.S. Patent 3,224,889) may be incorporated into the foam structures to improve physical properties including, for example, wet out rates of such foams.

U.S. Patent 4,314,034 discloses a polyurethane foamed sponge formed from the combination of a hydrophilic oxyalkylene polyol capped with isocyanate groups and 1 to 30 percent by weight of a polymeric polyisocyanate, such as a polymeric MDI, sold by The Dow Chemical Company under the trademark PAPI. The prepolymers are foamed in the presence of water, reinforcing fibers, surfactants, a thickening agent and up to 30 percent by weight of diatomaceous earth. With the diatomaceous earth and PAPI polymeric MDI the foam sponge has what is described as rapid wet out and improved wet strength.

U.S. Patent 5,650,450 discloses a hydrophilic foam prepared by reacting a MDI/ polymeric MDI-based isocyanate capped prepolymer with an aqueous component comprising a selected silicone glycol copolymer liquid surfactant.

Despite an extensive knowledge concerning the preparation of hydrophilic polyurethane foams based on MDI-based prepolymers, TDI based prepolymers are still extensively used in the industry. The preferred use of TDI-based prepolymers is based on the frequent inferior performance of MDI-based prepolymers as compared to the TDI prepolymer. However, due to ever stricter health and safety regulations surronding TDI and TDI based adducts, there is a need to provide alternative MDI-based prepolymers which when used in the preparation of hydrophilic polyurethane foam provide for a competitive performance.

It has now been discovered that use of MDI-based prepolymers based on an isocyanate having an elevated 2,4'-MDI content, when preparing hydrophilic polymers for foamed and non-foamed products, can satisfy many unmet needs. The MDI-based prepolymers and isocyanate compositions as presented in the above-noted publications are generally based on compositions that have a minimal 2,4-MDI content and typically at most a 10 percent 2,4-MDI content.

In a first aspect, this invention relates to a hydrophilic polyurethane polymer prepared by bringing together water and an isocyanate-terminated prepolymer wherein the prepolymer is the reaction product of:
a) a polyether polyol composition having a nominal hydroxyl functionality of from 1.6 to 8, a molecular weight of from 1000 to 12000 and having at least 30 percent by weight of oxyethylene groups,
b) with an isocyanate mixture that contains methylene diphenylisocyanate (MDI) in at least 60 weight percent of the total isocyanate present and wherein the MDI comprises the 2,4'- and 4,4'-methylene diphenylisocyanate isomer in a molar ratio of from 25:75 to 80:20;
   the prepolymer having a free NCO content of from 1 to less than 15 percent by weight.

In a second aspect, this invention relates to an isocyanate-terminated prepolymer composition that has a free isocyanate content of less than 15 percent and is the reaction product of :
a) a polyether polyol composition having a nominal hydroxyl functionality of from 1.6 to 8, a molecular weight of from 1000 to 12000 and having at least 30 percent by weight of oxyethylene groups;
b) witch a stoichiometric excess of an isocyanate mixture that contains methylene diphenylisocyanate (MDI) in at least 60 weight percent of the total isocyanate present and wherein the MDI comprises the 2,4'- and 4,4'-methylene diphenylisocyanate isomer in a molar ratio of from 25:75 to 80:20.

In a third aspect, this invention relates to process for making a hydrophilic polyurethane foam comprising mixing together an aqueous phase and an isocyanate-terminated prepolymer composition that is the reaction product of:
a) a polyether polyol having a nominal hydroxyl functionality of from 1.6 to 8, a molecular weight of from 1000 to 12000 and having at least 30 percent by weight of oxyethylene groups; with a stoichiometric excess of
b) an isocyanate mixture that contains methylene diphenylisocyanate (MDI) in at least 60 weight percent of the total isocyanate present and wherein the MDI comprise the 2,4'- and 4,4 '-methylene diphenylisocyanate isomer in a molar ratio of from 25:75 to 80:20
   wherein the isocyanate-tenninated prepolymer composition and aqueous phase are present in a parts by weight ratio of from 100:10 to 100:500 and the proviso that the free NCO content of the prepolymers is less than 15 percent.

In a fourth aspect, this invention relates to process for making a hydrophilic polyurethane gel comprising mixing together an aqueous phase and an isocyanate-terminated prepolymer composition that is the reaction product of:
a) a polyether polyol having a nominal hydroxyl functionality of from 1.6 to 8, a molecular weight of from 1000 to 12000 and having at least 30 percent by weight of oxyethylene groups; with a stoichiometric excess of
b) an isocyanate mixture that contains methylene diphenylisocyanate (MDI) in at least 60 weight percent of the total isocyanate present and wherein the MDI comprises the 2,4'- and 4,4'-methylene diphenylisocyanate isomer in a molar ratio of from 25:75 to 80:20
   wherein the isocyanate-terminated prepolymer composition and aqueous phase are present in a parts by weight ratio of from 100:900 to 100:5000, with the proviso that the NCO content of the prepolymer is less than 15 percent.

The hydrophilic polyurethane polymer of this present invention is prepared by bringing and reacting together an aqueous phase with an isocyanate-terminated prepolymer. The resulting polymer can have a foam or gel structure. The isocyanate-terminated prepolymer generally has an average isocyanate content of greater than 1 and generally less than 15 weight percent. Preferably, the polymer has an average isocyanate content of from 1 to 14, more preferably from 2 to 12, and yet more preferably from 3 to 10 weight percent. Typically when intending to prepare a gel, the isocyanate-terminated prepolymer advantageously has an isocyanate content of from 1 to 6, preferably from 2 to 5 weight percent. The isocyanate-terminated prepolymers of higher isocyanate content are generally preferred when intending to prepare foam. Polyisocyanate can be back blended into the prepolymer to reach the desired free NCO content.

The prepolymer is the reaction product of a polyether polyol with a stoichiometric excess of an isocyanate mixture that contains methylene diphenylisocyanate (MDI) isomers in at least 60 weight percent of total isocyanate present and wherein the MDI comprises the 2,4'- and 4,4'-methylene diphenylisocyanate isomers in a molar ratio of from 25:75 to 80:20, preferably from 40:60 to 80:20, more preferably in from 45:55 to 70:30. The balance of the isocyanate mixture when not methylene diphenylisocyanate can comprise toluene diisocyanate, hexamethylene diisocyanate, isophorone diisocyanate, polymethylene polyphenylisocyanate, carbodiimide or allophonate or uretonimine adducts of methylene diphenylisocyanate and mixtures thereof. Preferred isocyanates to make up the balance of the composition are polymethylene polyphenylisocyanate, carbodiimide or allophonate or uretonimine adducts of methylene diphenylisocyanate. In a particularly preferred embodiment, the isocyanate mixture used to prepare the prepolymer consists essentially of 2,4'- and 4,4'-methylene diphenylisocyanate isomers in a molar ratio of from 25:75 to 80:20, preferably from 40:60 to 80:20; more preferably from 45:55 to 70:30. Preferably, the isocyanate mixture contains greater than 40 percent by weight of the 2,4-MDI isomer. The combination of a low NCO content and increased 2,4-MDI isomer in the prepolymer, when reacted with water, unexpectedly give a foam having high hydrophilicity and good properties in terms on foam density and flexibility.

The polyether polyol composition used to prepare the prepolymer comprises one or more polyether polyols and has an average nominal hydroxyl functionality of from 1.6 to 8, a molecular weight of from 1000 to 12000 and having at least 30 percent, preferably at least 40 percent, and more preferably at least 50 percent, and yet more preferably at least 65 percent by weight of oxyethylene groups. By the term "nominal", it is meant the average hydroxyl functionality of the composition with the assumption that the average functionality of the polyol is identical to that average functionality (active hydrogen atoms per molecule) of the initiator as used in the preparation of the polyol; in practice it may be somewhat less due to presence of some terminal unsaturation. By the term "molecular weight", it is understood the theoretical molecular weight expressed in Daltons and being calculated with consideration to the molecular weights and amounts of reactants from which the polyol is prepared. In a preferred embodiment, the polyol composition has a nominal functionality of from 1.6 to 6, more preferably from 1.6 to 4, and yet more preferably from 1.6 to 2.5. Similarly, the preferred molecular weight for the polyol composition is from 1000 to 8000, more preferably from 1000 to 5000, and yet more preferably from 1500 to 3500. Combinations of polyether polyols, including monohydroxyl substances and low molecular weight diol and triol substances or amines, of varying functionality and oxyethylene content can be used but then in this event the average functionality, molecular weight and oxyethylene content of such combination will be as mentioned above. It is also to advantage that the oxyethylene content of the individual polyols be randomly distributed through out the molecule.

In a particularly preferred embodiment of this invention: the polyether polyol composition used to prepare the prepolymer is a polyether polyol having a nominal hydroxyl functionality of from 1.6 to 2.5, a molecular weight of from 1500 to 3500 and having at least 65 percent by weight of oxyethylene groups.

In a particularly preferred embodiment of this invention the isocyanate-terminated prepolymer prepared and subsequently used to manufacture a hydrophilic polymer has an isocyanate content of from 2 to 15 weight percent and is obtained by reacting an isocyanate mixture that consists essentially of the 2,4'- and 4,4'-methylene diphenylisocyanate isomers in a molar ratio of from 45: 55 to 70:30; with a polyol composition comprising a polyether polyol having a nominal hydroxyl functionality of from 1.6 to 2.5, a molecular weight of from 1500 to 3500 and having at least 65 percent by weight of oxyethylene groups.

The polyoisocyanates and polyols used in the present invention are commercially available or can be produced using standard processes known to those skilled in the art. In general the polyether polyol is obtainted in conventional manner by reacting ethylene oxide and/or propylene oxide simultaneously and/or sequentially in any order with an initiator having 2 to 8 active hydrogen atoms. Such initiators include water, ethylene glycol, propylene glycol, butanediol, glycerol, trimethyol propane, ethylene diamine, triethanolamine, sucrose and sorbitol.

The prepolymer is prepared in a conventional way by combining the diisocyanate and the polyol at 20-100°C and if desired, in the presence of urethane-forming catalyst, such as a tertiary amine or tin compound. The relative amounts of the diisocyanate and the polyol are chased in such a way as to arrive at the desired free NCO content of the final product. In general the equivalent amount of diisocyanate will be higher than the equivalent anount of the polyol. The preparation of the prepolymer is a routine operation for those skilled in the art.

In making a polyurethane polymer, the ratio of the amount of isocyanate-terminated prepolymer to the aqueous mixture can vary over a wide range depending on the target density of the resulting polymer and its associated physical parameters; and also on the isocyanate content of the composition. When intending to prepare a hydrophilic foam, typically 100 parts by weight of the isocyanate-terminated prepolymer will be mixed and reacted with from 10 to 500 parts by weight of an aqueous phase, preferably 50 to 300, and more preferably with from 50 to 150 parts by weight of the aqueous phase. Conversely when intending to prepare a hydrophilic gel, 100 parts by weight of the isocyanate-terminated prepolymer will be mixed and reacted with from 5000 to 900 and preferably from 3500 to 1500 parts by weight of an aqueous phase. Polymers having utility as a binder may also be prepared in a similar manner as described herein; generally the relative amounts of isocyanate-terminated prepolymer to aqueous phase will be between the ranges noted for the foam and gel applications. A preferred method of foaming the isocyanate-terminated prepolymer comprising prepolymer is to bring the aqueous phase, for example, a 2 percent solution of the surfactant to a temperature of from 5°C to 50°C and introduce to this the isocyanate-terminated prepolymer. The resulting mixture is then brought to the mold or pour area, dispensed and allowed to react out.

When intended to use the isocyanate-terminated prepolymer in the manufacture of a hydrophilic polyurethane foam, it is found advantageous to incorporate a crosslinking agent within the prepolymer in contrast to having it present in the hydroxyl composition to be reacted with the isocyanate/prepolymer composition. Introduction of the cross-linking agent in this manner facilitates preparation of foam with attractive mechanical properties. Representative of crosslinkers suitable for incorporation into the prepolymer are low molecular weight polyols typically having an average hydroxyl functionality of from 3 to 4, or low molecular weight amines having typically 3 or 4 amine moieties. Illustrative and preferred are glycerine, trimethylolpropane and low molecular weight alkotylated derivatives thereof. Ethylene diamine is also commonly used although it is a less preferred amine cross-linking agent for use with the present invention. Such cross-linking agent may be prevent in an amount of from 0.1 to 5, preferably from 0.5 to 3 and more preferably from 1 to 3 percent of the total amount by weight of polyether polyol, cross-linking agent and optional viscosity modifier to be reacted with the isocyanate.

Hydrophilic polyurethane foam is prepared by contacting under the reaction conditions the isocyanate-terminated prepolymer with an aqueous phase. The aqueous phase comprises essentially water and, as might be required, minor amounts of surfactant, catalyst, or a thickening agent. While it is possible to prepare hydrophilic foam in the absence of surfactant it is advantageous to have present a surfactant. Surfactants are chosen to give a foam with a good appearance of cell structure and size and to minimize collapse and or foam deformations, such as for example splitting. Examples of preferred surfactants are the block copolymers of oxyethylene and oxypropylene such as the Pluronic Polyol surfactants manufactured by BASF. Generally preferred are the non-ionic surfactants such as available under the Pluronic trade name and include the designated products L-62, L-72, L-92, P-75 or P-85. Other surfactants equivalent in nature or preformance may be used in place of the mentioned substances. Surfactants typically will be present in the aqueous phase in an amount of from 0.5 to 4, preferably from 0.75 to 3.0, parts by weight per 100 parts by weight of the total aqueous phase including surfactant.

Hydrophilic foams frequently can be prepared in the absence of a catalyst. However if required, a catalyst may be incorporated into the isocyanate-terminated prepolymer/aqueous mixture by premixing with the aqueous mixture or alternatively with the isocyanate-terminated prepolymer but then in this instance only immediately before it use in reaction with the aqueous mixture. When required, the catalyst is added in an amount to modify the curing time of the reaction product and facilitate in attaining the desired physical attributes of the foam. Suitable common catalysts are substances generally known in the art for promoting the reaction of isocyanate with a polyol and include basic substances such as sodium bicarbonate or the tertiary amines and organometallic compounds. Illustrative of suitable catalysts include n-methyl morpholine, n-ethyl morpholine, trimethylamine, triethylamine, tetramethyl butane diamine, triethylenediamaine, dimethylaminoethanolamine, benzylidimethylamine, dibutyl tin dilaurate and stannous octoate.

Thickening agents may be present when it is desired to control the viscosity of the aqueous phase and facilitate the transportation and distribution of, for example, fillers or fibers. Exemplary of typical fillers includes clays, diatomaceous earth, calcium carbonate, and mineral fibers such as wallastonite; aqueous latexes such as for example a styrenebutadiene. Examples of thickening agents are natural products such as xanthan gums, or chemical agents such as polyacrylamide polymers and gels as sold by The Dow Chemical Company. Other additives which may also be present include mixing aids and notably emulsifiers.

The aqueous phase may also be used to introduce to other substances, such as fatty oils and functional additives, besides fibers and fillers when desiring to modify physical properties of the resulting polymer. Also present can be fragrances or perfumes or other such substances that can be detected by scent should this be required for the end application. If the end application requires a polymer that has some physiological active properties, the aqueous phase can also be used to introduce active molecules such as for example, pesticides, insecticides, herbicides, attractants, pheromones, growth promoting or regulating substances or plant or animal nutrients. If the resulting polymer is to be used in end applications where electrical or luminescent properties are required, the aqueous mixture may be used to introduce electrolytes so as to render the polymer electro-conductive, or fluorescent or phosphorescent additives so as to render the polymer luminescent. While generally such additional substances are introduced via the aqueous phase, the isocyanate-terminated prepolymer can also be utilized in the same manner when no adverse reactions or process conditions prevail.

Additives, such as those disclosed above, for the production of gels based on the prepolymers of the present invention can be used in the production of a gel.

Foams produced by the prepolymers of the present invention are useful for safety applications, such as ear plugs; cosmetics, such as facial sponges; wound dressing, such as bandages; clothing, such as shoulder pads, etc. Gels produced by the prepolymers of the present invention are particularly useful in support applications, such as furniture; use in air fresheners and in biosenors, that is matrix for enzyme immobiliation.

The following examples are given to illustrate the invention and should not be interpreted as limiting it in any way. Unless stated otherwise, all parts and percentages are by weight.

### Example 1

An isocyanate-terminated prepolymer is prepared by reacting 16.9 parts of a 50:50 mixture of 2,4'-methylene diphenylisocyanate and 4,4'-methylene diphenylisocyanate with 83 parts by weight of a polyether polyol, NIXOLEN VS 40 available from Enichem and understood to be a polyol with a nominal functionality of 2; a molecular weight of about 2600; and a randomly distributed oxyethylene content of about 75 weight percent. The isocyanate is introduced to a reaction vessel and brought to a temperature of about 70°C; the polyol is then added in incremental amounts over a period of about 2 hours. The resulting mixture is stirred continuously until a constant isocyanate content is observed. The resulting isocyanate-terminated prepolymer is observed to have an isocyanate content of 3.2 percent and a viscosity of 14,400 mPa·s (cps) at 23°C.

### Example 2

The procedure of Example 1 is used to prepare an isocyanate-terminated prepolymer by reacting 25 parts of a 50:50 mixture of 2,4'-methylene diphenylisocyanate and 4,4'-methylene diphenylisocyanate with 74.9 parts by weight of a polyether polyol, NIXOLEN VS 40. The resulting isocyanate-terminated prepolymer is observed to have an isocyanate content of 6.3 percent and a viscosity of 6000 mPa·s (cps) at 23°C.

### Example 3

The procedure of Example 1 is used to prepare an isocyanate-terminated prepolymer by reacting 34.6 parts of a 50:50 mixture of 2,4'-methylene diphenylisocyanate and 4,4'-methylene diphenylisocyanate with 65.4 parts by weight of a polyether polyol, NIXOLEN VS 40. The resulting isocyanate-terminated prepolymer is observed to have an isocyanate content of 9.3 percent and a viscosity of 3500 mPa·s (cps) at 23°C.

### Example 4

The procedure of Example 1 is used to prepare an isocyanate-terminated prepolymer by reacting 26.7 parts of a 50:50 mixture of 2,4'-methylene diphenylisocyanate and 4,4'-methylene diphenylisocyanate with 73.3 parts by weight of a polyether polyol, POLY 22-56 available from ARCH and understood to be a diol having an average molecular weight of about 2000 and an oxyethylene content of about 80 percent. The resulting isocyanate-terminated prepolymer is observed to have an isocyanate content of 5.9. percent and a viscosity of 12000 mPa·s (cps) at 23°C.

### Example 5

The procedure of Example 1 is used to prepare an isocyanate-terminated prepolymer by reacting 26,7 parts of a 50:50 mixture of 2,4'-methylene diphenylisocyanate and 4,4'-methylene diphenylisocyanate with 73,3 parts by weight of a polyether polyol, POLY 22-56 available from ARCH and understood to be a diol having an average molecular weight of about 2000 and an oxyethylene content of about 80 percent. The resulting isocyanate-terminated prepolymer is observed to have an isocyanate content of 9.1 percent and a viscosity of 12,000 mPa·s (cps) at 23°C.

### Example 6

Hydrophilic polyurethane foams are prepared by reacting the indicated Isocyanate-terminated prepolymer with an aqueous phase "A1" or "A2". The aqueous phase "A1" comprises the surfactant PLURONIC PE 6800, available from BASF, at a 2wt percent concentration. The aqueous phase A2 comprises the surfactant EMULGADE 1000 NI, available from Henkel, understood to be a blend of a fatty alcohol derivatives; also at a concentration of 2wt percent. Physical properties of the resulting foams as reported in the following table are observed according to the following procedures; density by DIN 53420; tensile properties and elongation by DIN 53571A; and tear properties by DIN 53515. The isocyanate-terminated prepolymers HYPOL 2000 and HYPOL 3000 are commercially available TDI-based compositions from The Dow Chemical Company. As can be seen from the reported data the hydrophilic polyurethane foam prepared from the MDI-based isocyanate exhibits equivalent or better performance than the TDI-based hydrophilic polyurethane foam.

| System | **NCO percent** | **Aqueous phase** | **Density Dry foam [kg/m³]** | **Tensile Dry [N/mm²]** | **Tensile Wet [N/mm²]** | **Elongation Dry [ percent]** | **Elongation Wet [ percent]** | **Tear Dry [N/mm]** | **Tear Wet [N/mm]** |
|---|---|---|---|---|---|---|---|---|---|
| Hypol 2000 | 6.6 | A1 | 105 | 0,165 | 0,032 | 234 | 111 | 0,74 | 0,26 |
| Hypol 2000 | 6,6 | A2 | 104 | 0,0008 | 0,031 | 246 | 99 | 0,51 | 0,10 |
| NCO of Example 2 | 6,3 | A1 | 112 | 0,094 | 0,063 | 298 | 153 | 1,28 | 0,97 |
| NCO of Example 2 | 6.3 | A2 | 121 | 0.115 | 0,065 | 267 | 127 | 1,11 | Not measured |
| NCO of Example 4 | 5,9 | A1 | 109 | 0,095 | 0,054 | 269 | 154 | 1,10 | 0,96 |
| NCO of Example4 | 5.9 | A2 | 106 | 0,073 | 0,058 | 264 | 183 | 1,19 | 0,70 |
| Hypol 3000 | 9.4 | A1 | 88 | 0,094 | 0,044 | 176 | 92 | 0,73 | 0,25 |
| Hypol 3000 | 9,4 | A2 | 93 | 0,114 | 0,037 | 163 | 68 | 0,51 | 0,15 |
| NCO of Example 3 | 9,3 | A1 | 67 | 0,056 | 0,041 | 208 | 101 | 0,78 | 0,47 |
| NCO of Example 3 | 9.3 | A2 | 72 | 0,085 | 0,066 | 298 | 155 | 0,75 | 0,52 |
| NCO of Example 5 | 9,1 | A1 | 76 | 0,030 | 0,040 | 256 | 113 | 0,915 | 0,47 |
| NCO of Example 5 | 9.1 | A2 | 75 | 0.076 | 0,071 | 293 | 215 | 0,803 | 0,52 |

### Example 7 (Comparative)

The procedure of Example 1 is used to prepare an isocyanate-terminated prepolymer by reacting 41.8 parts of a 2:98 mixture of 2,4'-methylene diphenylisocyanate and 4,4'-methylene diphenylisocyanate with 55.7 parts by weight of a polyether polyol, POLY 22-56 available from ARCH and understood to be a diol having an average molecular weight of about 2000 and an oxyethylene content of about 80 percent and with 2.5 parts of trimethylolpropane. The resulting isocyanate-terminated prepolymer is observed to have an isocyanate content of 9.1 percent and a viscosity of 19,000 mPa·s (cps) at 25°C.

### Example 8

The procedure of Example 1 is used to prepare an isocyanate-terminated prepolymer by reacting 41.8 parts of a 50:50 mixture of 2,4'-methylene diphenylisocyanate and 4,4'-methylene diphenylisocyanate with 55.7 parts by weight of a polyether polyol, POLY 22-56 available from ARCH and understood to be a diol having an average molecular weight of about 2000 and an oxyethylene content of about 80 percent. and with 2.5 parts of trimethylolpropane. The resulting isocyanate-terminated prepolymer is observed to have an isocyanate content of 9.1 percent and a viscosity of 18,000 mPa·s (cps) at 25°C. With reference to Example 7 it is observed that isocyanate-terminated prepolymers prepared with elevated amounts of 2,4'-MDI exhibit a lower viscosity.

### Example 9 (Comparative)

The procedure of Example 1 is used to prepare an isocyanate-terminated prepolymer by reacting 47.5 parts of a 2:98 mixture of 2,4'-methylene diphenylisocyanate and 4,4'-methylene diphenylisocyanate with 50 parts by weight of a polyoxyethylene glycol having a molecular weight of 1000 and with 2.5 parts of trimethylolpropane. The resulting isocyanate-terminated prepolymer is observed to have an isocyanate content of 9.2 percent and a viscosity of 58,700 mPa·s (cps) at 25°C.

### Example 10

The procedure of Example 1 is used to prepare an isocyanate-tenninated prepolymer by reacting 47.5 parts of a 50:50 mixture of 2,4'-methylene diphenylisocyanate and 4,4'-methylene diphenylisocyanate with 50 parts by weight of a polyoxyethylene glycol having a molecular weight of 1000 and with 2.5 parts of trimethylolpropane. The resulting isocyanate-terminated prepolymer is observed to have an isocyanate content of 9.2. percent and a viscosity of 44,500 mPa·s (cps) at 25°C. With reference to Example 9 it is observed that isocyanate-terminated prepolymers prepared with elevated amounts of 2,4'-MDI exhibit a lower viscosity.

### Example 11

The procedure of Example 1 is used to prepare an isocyanate-terminated prepolymer by reacting 44 parts of a 50:50 mixture of 2,4'-methylene diphenylisocyanate and 4,4'-methylene diphenylisocyanate with a polyol mixture containing (I) 25.5 parts by weight of a polyoxyethylene glycol having a molecular weight of 1000 polyoxyethylene glycol having a molecular weight of 1000 (ii) 25.5 parts by weight of a glycerine initiated polyoxyethylene-oxypropylene polyol having a molecular weight of about 7800 and an oxyethylene content of about 70 percent; and (iii) 5 parts by weight of dipropylene glycol The resulting isocyanate-terminated prepolymer is observed to have an isocyanate content of 8.9.percent and a viscosity of 32,600 mPa·s (cps) at 25°C.

Other embodiments of the invention will be apparent to those skilled in the art from a consideration of this specification or practice of the invention disclosed herein. It is intended that the specification and examples be considered as exemplary only, with the true scope of the inveniton being indicated by the following claims.

## Claims

1. A hydrophilic polyurethane polymer prepared by bringing together water and an isocyanate-terminated prepolymer wherein the prepolymer is the reaction product of :
a) a polyether polyol composition having a nominal hydroxyl functionality of from 1.6 to 8, a molecular weight of from 1000 to 12000 and having at least 30 percent by weight of oxyethylene groups,
b) with an isocyanate mixture that contains methylene diphenylisocyanate (MDI) in at least 60 weight percent of the total isocyanate present and wherein the MDI comprises the 2,4'- and 4,4'-methylene diphenylisocyanate isomer in a molar ratio of from 25:75 to 80:20;
the prepolymer having a free NCO content of from 1 to less than 15 percent by weight.

2. The hydrophilic polyurethane polymer of Claim 1 obtained from an isocyanate-terminated prepolymer which has an isocyanate content of from 1 to 14 weight percent.

3. The hydrophilic polyurethane polymer of Claim 2 obtained from an isocyanate-terminated prepolymer which has an isocyanate content of from 2 to 12 weight percent.

4. The hydrophilic polyurethane polymer of Claim 1 wherein the isocyanate mixture consists essentially of the 2,4'- and 4,4'-methylene diphenylisocyanate isomers in a molar ratio of from 40:60 to 80:20.

5. The hydrophilic polyurethane polymer of Claim 4 wherein the isocyanate mixture consists essentially of the 2,4'- and 4,4'-methylene diphenylisocyanate isomers in a molar ratio of from 45:55 to 70:30.

6. The hydrophilic polyurethane polymer of Claim 1 wherein the remaining balance of the isocyanate-terminated prepolymer comprises toluene diisocyanate, hexamethylene diisocyanate, isophorone diisocyanate, polymethylene polyphenylisocyanate, carbodiimide or allophonate adducts of methylene diphenylisocyanate.

7. The hydrophilic polyurethane polymer of Claim 1 wherein the polyether polyol has a nominal hydroxyl functionality of from 1.6 to 4, a molecular weight of from 1000 to 8000 and at least 50 percent by weight of oxyethylene groups.

8. An isocyanate-terminated prepolymer composition that has an isocyanate content of less than 15 weight percent and is the reaction product of :
a) a polyether polyol composition having a nominal hydroxyl functionality of from 1.6 to 8, a molecular weight of from 1000 to 12000 and having at least 30 percent by weight of oxyethylene groups;
b) with a stoichiometric excess of an isocyanate mixture that contains methylene diphenylisocyanate (MDI) in at least 60 weight percent of the total isocyanate present and wherein the MDI comprises the 2,4'- and 4,4'-methylene diphenylisocyanate isomer in a molar ratio of from 25:75 to 80:20.

9. An isocyanate-terminated prepolymer composition that has an isocyanate content of from 2 to 12 weight percent and is the reaction product of :
a) a polyether polyol having a nominal hydroxyl functionality of from 1.6 to 4, a molecular weight of from 1000 to 5000 and having at least 65 percent by weight of oxyethylene groups; with a stoichiometric excess of
b) an isocyanate mixture that consists essentially of methylene diphenylisocyanate (MDI) wherein the MDI comprises the 2,4'- and 4,4'-methylene diphenylisocyanate isomer in a molar ratio of from 40:60 to 60:40.

10. A process for making a hydrophilic polyurethane foam comprising mixing together an aqueous phase with an isocyanate-terminated prepolymer composition that is the reaction product of :
a) a polyether polyol composition having a nominal hydroxyl functionality of from 1.6 to 8, a molecular weight of from 1000 to 12000 and having at least 30 percent by weight of oxyethylene groups; with a stoichiometric excess of
b) an isocyanate mixture that contains methylene diphenylisocyanate (MDI) in at least 60 weight percent of total isocyanate present and wherein the MDI comprises the 2,4'- and 4,4'-methylene diphenylisocyanate isomer in a molar ratio of from 25:75 to 80:20,
wherein the isocyanate-terminated prepolymer composition and aqueous phase are present in a parts by weight ratio of from 100:10 to 100:500 and the proviso that the free NCO content of the prepolymer is less than 15 weight percent.

11. The process of Claim 10 wherein the aqueous phase consists essentially of water and from 0.1 to 4 parts by weight of surfactant per 100 parts by weight of the total aqueous phase including surfactant.

12. A process for making a hydrophilic polyurethane gel comprising mixing together an aqueous phase with an isocyanate-terminated prepolymer composition that is the reaction product of :
a) a polyether polyol composition having a nominal hydroxyl functionality of from 1.6 to 8, a molecular weight of from 1000 to 12000 and having at least 30 percent by weight of oxyethylene groups; with a stoichiometric excess of
b) an isocyanate mixture that contains methylene diphenylisocyanate (MDI) in at least 60 weight percent of total isocyanate present and wherein the MDI comprises the 2,4'- and 4,4'-methylene diphenylisocyanate isomer in a molar ratio of from 25:75 to 80:20,
wherein the isocyanate-terminated prepolymer composition and aqueous phase are present in a parts by weight ratio of from 100:900 to 100:5000 and the proviso that the free NCO content of the prepolymer is less than 15 weight percent.

## Patentansprüche

1. Hydrophiles Polyurethanpolymer, hergestellt durch Zusammenbringen von Wasser und einem isocyanatterminierten Prepolymer, wobei das Prepolymer das Reaktionsprodukt ist von:
a) einer Polyetherpolyolzusammensetzung mit einer nominalen Hydroxylfunktionalität von 1,6 bis 8, einem Molekulargewicht von 1000 bis 12000 und mit mindestens 30 Gew.-% Oxyethylengruppen,
b) mit einer Isocyanatmischung, die Methylendiphenylisocyanat (MDI) in mindestens 60 Gew.-% des insgesamt vorhandenen Isocyanats enthält, und wobei das MDI das 2,4'- und 4,4'-Methylendiphenylisocyanatisomer in einem Molverhältnis von 25:75 bis 80:20 umfasst;
wobei das Prepolymer einen Gehalt an freiem NCO von 1 bis weniger als 15 Gew.-% hat.

2. Hydrophiles Polyurethanpolymer nach Anspruch 1, erhalten aus einem isocyanatterminierten Prepolymer, das einen Isocyanatgehalt von 1 bis 14 Gew.-% hat.

3. Hydrophiles Polyurethanpolymer nach Anspruch 2, erhalten aus einem isocyanatterminierten Prepolymer, das einen Isocyanatgehalt von 2 bis 12 Gew.-% hat.

4. Hydrophiles Polyurethanpolymer nach Anspruch 1, wobei die Isocyanatmischung im Wesentlichen aus den 2,4'- und 4,4'-Methylendiphenylisocyanatisomeren in einem Molverhältnis von 40:60 bis 80:20 besteht.

5. Hydrophiles Polyurethanpolymer nach Anspruch 4, wobei die Isocyanatmischung im Wesentlichen aus den 2,4'- und 4,4'-Methylendiphenylisocyanatisomeren in einem Molverhältnis von 45:55 bis 70:30 besteht.

6. Hydrophiles Polyurethanpolymer nach Anspruch 1, wobei der verbleibende Rest des isocyanatterminierten Prepolymers Toluoldiisocyanat, Hexamethylendiisocyanat, Isophorondiisocyanat, Polymethylenpolyphenylisocyanat, Carbodiimid- oder Allophanataddukte von Methylendiphenylisocyanat umfasst.

7. Hydrophiles Polyurethanpolymer nach Anspruch 1, wobei das Polyetherpolyol eine nominale Hydroxylfunktionalität von 1,6 bis 4, ein Molekulargewicht von 1000 bis 8000 und mindestens 50 Gew.-% Oxyethylengruppen besitzt.

8. Isocyanatterminierte Prepolymerzusammensetzung, die einen Isocyanatgehalt von weniger als 15 Gew.-% hat und das Reaktionsprodukt ist von:
a) einer Polyetherpolyolzusammensetzung mit einer nominalen Hydroxylfunktionalität von 1,6 bis 8, einem Molekulargewicht von 1000 bis 12000 und mit mindestens 30 Gew.-% Oxyethylengruppen,
b) mit einem stöchiometrischen Überschuss einer Isocyanatmischung, die Methylendiphenylisocyanat (MDI) in mindestens 60 Gew.-% des insgesamt vorhandenen Isocyanats enthält, und wobei das MDI das 2,4'- und 4,4'-Methylendiphenylisocyanatisomer in einem Molverhältnis von 25:75 bis 80:20 umfasst.

9. Isocyanatterminierte Prepolymerzusammensetzung, die einen Isocyanatgehalt von 2 bis 12 Gew.-% hat und das Reaktionsprodukt ist von:
a) einer Polyetherpolyolzusammensetzung mit einer nominalen Hydroxylfunktionalität von 1,6 bis 4, einem Molekulargewicht von 1000 bis 5000 und mit mindestens 65 Gew.-% Oxyethylengruppen; mit einem stöchiometrischen Überschuss von
b) einer Isocyanatmischung, die im Wesentlichen aus Methylendiphenylisocyanat (MDI) besteht, wobei das MDI das 2,4'- und 4,4'-Methylendiphenylisocyanatisomer in einem Molverhältnis von 40:60 bis 60:40 umfasst.

10. Verfahren zur Herstellung eines hydrophilen Polyurethanschaums, bei dem eine wässrige Phase mit einer isocyanatterminierten Prepolymerzusammensetzung zusammengemischt wird, die das Reaktionsprodukt ist von:
a) einer Polyetherpolyolzusammensetzung mit einer nominalen Hydroxylfunktionalität von 1,6 bis 8, einem Molekulargewicht von 1000 bis 12000 und mit mindestens 30 Gew.-% Oxyethylengruppen; mit einem stöchiometrischen Überschuss von
b) einer Isocyanatmischung, die Methylendiphenylisocyanat (MDI) in mindestens 60 Gew.-% des insgesamt vorhandenen Isocyanats enthält, und wobei das MDI das 2,4'- und 4,4'-Methylendiphenylisocyanatisomer in einem Molverhältnis von 25:75 bis 80:20 umfasst,
wobei die isocyanatterminierte Prepolymerzusammensetzung und die wässrige Phase in einem Verhältnis von 100:10 bis 100:500 Gewichtsteilen vorliegen und mit der Maßgabe, dass der Gehalt an freiem NCO des Prepolymers weniger als 15 Gew.-% beträgt.

11. Verfahren nach Anspruch 10, wobei die wässrige Phase im Wesentlichen aus Wasser und von 0,1 bis 4 Gewichtsteilen Tensid pro 100 Gewichtsteilen der gesamten wässrigen Phase einschließlich Tensid besteht.

12. Verfahren zur Herstellung eines hydrophilen Polyurethangels, bei dem eine wässrige Phase mit einer isocyanatterminierten Prepolymerzusammensetzung zusammengemischt wird, die das Reaktionsprodukt ist von:
a) einer Polyetherpolyolzusammensetzung mit einer nominalen Hydroxylfunktionalität von 1,6 bis 8, einem Molekulargewicht von 1000 bis 12000 und mit mindestens 30 Gew.-% Oxyethylengruppen; mit einem stöchiometrischen Überschuss von
b) einer Isocyanatmischung, die Methylendiphenylisocyanat (MDI) in mindestens 60 Gew.-% des insgesamt vorhandenen Isocyanats enthält, und wobei das MDI das 2,4'- und 4,4'-Methylendiphenylisocyanatisomer in einem Molverhältnis von 25:75 bis 80:20 umfasst,
wobei die isocyanatterminierte Prepolymerzusammensetzung und die wässrige Phase in einem Verhältnis von 100:900 bis 100:5000 Gewichtsteilen vorliegen und mit der Maßgabe, dass der Gehalt an freiem NCO des Prepolymers weniger als 15 Gew.-% beträgt.

## Revendications

1. Polymère polyuréthane hydrophile, préparé par mise en présence l'un de l'autre d'eau et d'un prépolymère à groupes terminaux isocyanate, lequel prépolymère est le produit de la réaction :
a) d'une composition de polyéther-polyol qui présente un nombre nominal de groupes fonctionnels hydroxyle de 1,6 à 8 et une masse molaire de 1000 à 12000 et qui comporte au moins 30 % en poids de groupes oxy-éthylène,
b) et d'un mélange d'isocyanates qui contient du diisocyanate de diphényl-méthane (MDI) en une quantité représentant au moins 60 % du poids total d'isocyanates présents, lequel MDI comprend les isomères 2,4' et 4,4' du diisocyanate de diphényl-méthane en un rapport molaire de 25/75 à 80/20,
et lequel prépolymère présente une teneur en groupes isocyanate libres qui vaut de 1 % à moins de 15 % en poids.

2. Polymère polyuréthane hydrophile, conforme à la revendication 1, obtenu à partir d'un prépolymère à groupes terminaux isocyanate dont la teneur en groupes isocyanate vaut de 1 à 14 % en poids.

3. Polymère polyuréthane hydrophile, conforme à la revendication 2, obtenu à partir d'un prépolymère à groupes terminaux isocyanate dont la teneur en groupes isocyanate vaut de 2 à 12 % en poids.

4. Polymère polyuréthane hydrophile, conforme à la revendication 1, pour lequel le mélange d'isocyanates est essentiellement constitué des isomères 2,4' et 4,4' du diisocyanate de diphényl-méthane, présents en un rapport molaire de 40/60 à 80/20.

5. Polymère polyuréthane hydrophile, conforme à la revendication 4, pour lequel le mélange d'isocyanates est essentiellement constitué des isomères 2,4' et 4,4' du diisocyanate de diphényl-méthane, présents en un rapport molaire de 45/55 à 70/30.

6. Polymère polyuréthane hydrophile, conforme à la revendication 1, pour lequel le complément du prépolymère à groupes terminaux isocyanate comprend du toluène-diisocyanate, de l'hexaméthylène-diisocyanate, de l'isophorone-diisocyanate, du polyméthylène-polyphényl-isocyanate, ou des produits d'addition de carbodiimide ou d'allophanate et de diisocyanate de diphényl-méthane.

7. Polymère polyuréthane hydrophile, conforme à la revendication 1, pour lequel le polyéther-polyol présente un nombre nominal de groupes fonctionnels hydroxyle de 1,6 à 4 et une masse molaire de 1000 à 8000 et comporte au moins 50 % en poids de groupes oxy-éthylène.

8. Composition de prépolymère à groupes terminaux isocyanate, qui présente une teneur en groupes isocyanate inférieure à 15 % en poids et qui est le produit de réaction
a) d'une composition de polyéther-polyol qui présente un nombre nominal de groupes fonctionnels hydroxyle de 1,6 à 8 et une masse molaire de 1000 à 12000 et qui comporte au moins 30 % en poids de groupes oxy-éthylène,
b) et d'un mélange d'isocyanates en excès stoechiométrique, qui contient du diisocyanate de diphényl-méthane (MDI) en une quantité représentant au moins 60 % du poids total d'isocyanates présents, lequel MDI comprend les isomères 2,4' et 4,4' du diisocyanate de diphényl-méthane en un rapport molaire de 25/75 à 80/20.

9. Composition de prépolymère à groupes terminaux isocyanate, qui présente une teneur en groupes isocyanate de 2 à 12 % en poids et qui est le produit de réaction
a) d'un polyéther-polyol qui présente un nombre nominal de groupes fonctionnels hydroxyle de 1,6 à 4 et une masse molaire de 1000 à 5000 et qui comporte au moins 65 % en poids de groupes oxy-éthylène,
b) et d'un mélange d'isocyanates en excès stoechiométrique, essentiellement constitué de diisocyanate de diphényl-méthane (MDI), lequel MDI comprend les isomères 2,4' et 4,4' du diisocyanate de diphényl-méthane en un rapport molaire de 40/60 à 60/40.

10. Procédé de fabrication d'une mousse de polyuréthane hydrophile, qui comporte le fait de mélanger ensemble une phase aqueuse et une composition de prépolymère à groupes terminaux isocyanate, laquelle composition est le produit de réaction
a) d'une composition de polyéther-polyol qui présente un nombre nominal de groupes fonctionnels hydroxyle de 1,6 à 8 et une masse molaire de 1000 à 12000 et qui comporte au moins 30 % en poids de groupes oxy-éthylène,
b) et d'un mélange d'isocyanates en excès stoechiométrique, qui contient du diisocyanate de diphényl-méthane (MDI) en une quantité représentant au moins 60 % du poids total d'isocyanates présents, lequel MDI comprend les isomères 2,4' et 4,4' du diisocyanate de diphényl-méthane en un rapport molaire de 25/75 à 80/20,
et dans lequel on prend la composition de prépolymère à groupes terminaux isocyanate et la phase aqueuse en un rapport, en parties en poids, de 100/10 à 100/500, étant entendu que la teneur du prépolymère en groupes isocyanate libres est inférieure à 15 % en poids.

11. Procédé conforme à la revnedication 10, dans lequel la phase aqueuse est essentiellement constituée d'eau et de 0,1 à 4 parties en poids de tensioactif pour 100 parties en poids, au total, de phase aqueuse, y compris le tensioactif.

12. Procédé de fabrication d'un gel de polyuréthane hydrophile, qui comporte le fait de mélanger ensemble une phase aqueuse et une composition de prépolymère à groupes terminaux isocyanate, laquelle composition est le produit de réaction
a) d'une composition de polyéther-polyol qui présente un nombre nominal de groupes fonctionnels hydroxyle de 1,6 à 8 et une masse molaire de 1000 à 12000 et qui comporte au moins 30 % en poids de groupes oxy-éthylène,
b) et d'un mélange d'isocyanates en excès stoechiométrique, qui contient du diisocyanate de diphényl-méthane (MDI) en une quantité représentant au moins 60 % du poids total d'isocyanates présents, lequel MDI comprend les isomères 2,4' et 4,4' du diisocyanate de diphényl-méthane en un rapport molaire de 25/75 à 80/20,
et dans lequel on prend la composition de prépolymère à groupes terminaux isocyanate et la phase aqueuse en un rapport, en parties en poids, de 100/900 à 100/5000, étant entendu que la teneur du prépolymère en groupes isocyanate libres est inférieure à 15 % en poids.
